# EUROPEAN PATENT APPLICATION

(11) **EP 4 421 097 A1**
(43) Date of publication of application: **28.08.2024**
(21) Application number: 22918772.9
(22) Date of filing: 09.12.2022
(51) Int. Cl.: C08F 2/01, B01J 19/08, C08F 14/18, C08G 85/00

(54) **POLYMERIZATION TANK FOR PRODUCTION OF FLUORINE-CONTAINING POLYMER AND METHOD FOR PRODUCING FLUORINE-CONTAINING POLYMER**

(30) Priority: 07.01.2022 JP 2022001647
(71) Applicant: Daikin Industries, Ltd., Osaka-shi, Osaka 530-0001 (JP)
(72) Inventor: MARUYA, Yoshiki, Osaka-Shi, Osaka 530-0001 (JP); TAKAOKA, Hiroshi, Osaka-Shi, Osaka 530-0001 (JP); SUZUKI, Takaaki, Osaka-Shi, Osaka 530-0001 (JP); NAKAO, Yuki, Osaka-Shi, Osaka 530-0001 (JP)
(74) Representative: Hoffmann Eitle
(86) International application number: PCT/JP2022/045470
(87) International publication number: WO 2023/132186

(57) **Abstract**

Provided is a polymerization tank that enables efficient withdrawal of a reaction mixture containing a particulate fluorine-containing polymer and water from the polymerization tank. A polymerization tank for polymerizing at least a fluorine-containing monomer through suspension polymerization in a reaction mixture that contains water to obtain a particulate fluorine-containing polymer, wherein: the polymerization tank has a side wall, a conical sloped bottom positioned below the side wall, and a withdrawal port for the reaction mixture positioned at the lower apex of the conical sloped bottom; and the apex angle of the conical sloped bottom is 90-120° inclusive.

## Description

### Technical Field

The present disclosure relates to a polymerization tank for production of a fluorine-containing polymer and, in more detail, to a polymerization tank for obtaining a particulate fluorine-containing polymer by polymerizing at least a fluorine-containing monomer in a reaction mixture containing water by suspension polymerization. The present disclosure also relates to a method for producing a fluorine-containing polymer using such a polymerization tank.

### Background Art

As a polymerization tank for production of a polymer, a polymerization tank having a side wall, a bottom portion that is positioned below the side wall and a draining port that is positioned at the lower apex portion of the bottom portion is used. As such a bottom portion, conventionally, a bottom portion having a semi-elliptical shape on a cross section is known (refer to Patent Literature 1).

In addition, a tubular reactor (polymerization tank) for production of a polymer having a conical constricting portion at one edge portion, in which the ratio of the diameter (D1) of the reactor to the diameter (D2) of the edge portion of the reactor conical constricting portion is 2:1 to 25:1 and the angle formed between D1 of the beginning part of the conical constricting portion and the inside conical wall is larger than 45° and smaller than 90°, is also known (refer to Patent Literature 2).

### Citation List

### Patent Literature

Patent Literature 1: JP H05-337362A
Patent Literature 2: JP H09-67404A

### Summary of Invention

### Technical Problem

However, in the case of obtaining a particulate fluorine-containing polymer by polymerizing at least a fluorine-containing monomer in a reaction mixture containing water by suspension polymerization in the conventional polymerization tank, there are cases where it takes a long time to drain the reaction mixture containing the particulate fluorine-containing polymer and water through the draining port that is positioned at the lower apex portion of the polymerization tank or the fluorine-containing polymer adheres to or remains on the bottom portion of the polymerization tank. When it takes a long time for draining, the production lead time becomes long in the case of performing a batch type or a semi-batch type, and a decrease in the production efficiency is caused. In addition, when the fluorine-containing polymer adheres to or remains on the bottom portion of the polymerization tank, an operation for removing the adhering and remaining fluorine-containing polymer by opening the polymerization tank or the like is required, and a decrease in the production efficiency is caused.

An objective of the present disclosure is to provide a polymerization tank for obtaining a particulate fluorine-containing polymer by polymerizing at least a fluorine-containing monomer in a reaction mixture containing water by suspension polymerization, in which the reaction mixture containing the particulate fluorine-containing polymer and water can be efficiently drained from the polymerization tank. Another objective of the present disclosure is to provide a method for producing a fluorine-containing polymer using such a polymerization tank.

### Solution to Problem

[1] A polymerization tank for obtaining a particulate fluorine-containing polymer by polymerizing at least a fluorine-containing monomer in a reaction mixture containing water by suspension polymerization, the polymerization tank comprising:
   a side wall;
   a conical inclined bottom portion that is positioned below the side wall; and
   a draining port of the reaction mixture that is positioned at a lower apex portion of the conical inclined bottom portion,
   wherein an apex angle of the conical inclined bottom portion is 90° or larger and 120° or smaller.
[2] The polymerization tank according to [1], wherein the apex angle of the conical inclined bottom portion is 105° or larger and 115° or smaller.
[3] A method for producing a fluorine-containing polymer, comprising:
   (a) polymerizing at least a fluorine-containing monomer in a reaction mixture containing water by suspension polymerization in the polymerization tank according to [1] or [2] to obtain a particulate fluorine-containing polymer; and
   (b) draining substantially all of the reaction mixture containing the particulate fluorine-containing polymer and water from the polymerization tank.
[4] The method for producing a fluorine-containing polymer according to [3],
   wherein, in the (a), the reaction mixture contains a fluorine-containing solvent and water, and
   in the (b), the reaction mixture contains the particulate fluorine-containing polymer and water, but is substantially free from the fluorine-containing solvent.
[5] The method for producing a fluorine-containing polymer according to [3] or [4], wherein the fluorine-containing polymer has an average particle size of 10 um or more and 2,000 µm or less.

### Advantageous Effect of Invention

According to the present disclosure, a polymerization tank for obtaining a particulate fluorine-containing polymer by polymerizing at least a fluorine-containing monomer in a reaction mixture containing water by suspension polymerization, in which the reaction mixture containing the particulate fluorine-containing polymer and water can be efficiently drained from the polymerization tank, is provided. In addition, according to the present disclosure, a method for producing a fluorine-containing polymer using such a polymerization tank is provided.

### Brief Description of Drawings

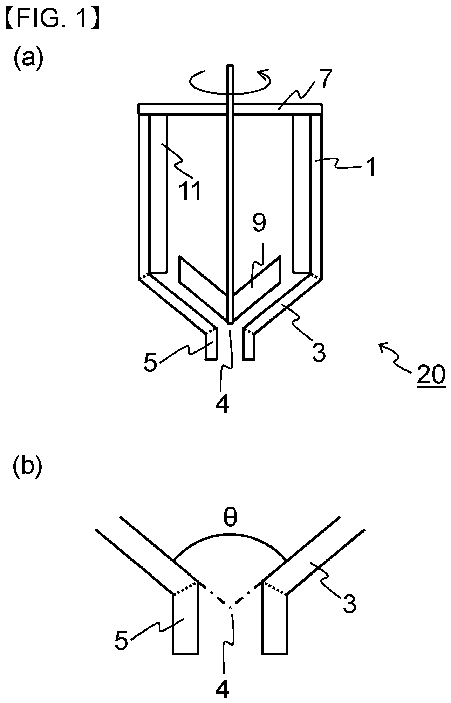

[FIG. 1] (a) is a schematic cross-sectional diagram of a polymerization tank in one embodiment of the present disclosure, and (b) is an enlarged cross-sectional diagram of the vicinity of an inclined bottom portion and a draining portion (here, a stirring blade is not shown).

### Description of Embodiment

Hereinafter, a polymerization tank for production of a fluorine-containing polymer and a method for producing a fluorine-containing polymer using such a polymerization tank in one embodiment of the present disclosure will be described in detail with reference to drawings. The attached drawings are schematic diagrams for describing the present disclosure, and the shape, scale or the like of each member is not limited thereto.

### (Polymerization Tank for Production of Fluorine-Containing Polymer)

When referring to FIG. 1, a polymerization tank 20 of the present embodiment is a polymerization tank for obtaining a particulate fluorine-containing polymer by polymerizing at least a fluorine-containing monomer in a reaction mixture containing water by suspension polymerization, the polymerization tank having
a side wall 1,
a conical inclined bottom portion 3 that is positioned below the side wall 1, and
a draining port 4 of the reaction mixture that is positioned at the lower apex portion of the conical inclined bottom portion 3.

In the present embodiment, the side wall 1 has a cylindrical shape, the lower edge of the side wall 1 is connected with the upper edge of the conical inclined bottom portion 3, the lower edge of the inclined bottom portion 3 forms the round draining port (opening) 4, and the lower edge of the inclined bottom portion 3 is connected with the upper edge of a cylindrical draining portion 5. In FIGS. 1(a) and 1(b), the boundaries between the side wall 1, the inclined bottom portion 3 and the draining portion 5 are indicated by dotted lines to facilitate understanding, but these may be integrally formed. The draining portion 5 includes a valve that can be opened and closed (not shown).

In the conical inclined bottom portion 3, the inner surface has a conical shape; however, when FIG. 1(b) is referred to, strictly, the inner surface of the inclined bottom portion 3 forms a conical shape with no apex portion, that is, a truncated cone shape, since the conical inclined bottom portion 3 forms the draining port (opening) 4. In the present disclosure, the apex angle of the conical inclined bottom portion 3 means the apex angle θ of the imaginary conical apex portion (indicated by the dash-dot line in FIG. 1(b)) of the inner surface of the inclined bottom portion 3.

The apex angle θ of the conical inclined bottom portion 3 is 90° or larger and 120° or smaller. This makes it possible to efficiently drain a reaction mixture 10 containing a particulate fluorine-containing polymer and water from the polymerization tank 20 even in the case of obtaining the particulate fluorine-containing polymer by polymerizing at least a fluorine-containing monomer in the reaction mixture containing water by suspension polymerization. In more detail, it is possible to drain the reaction mixture 10 containing the particulate fluorine-containing polymer and water from the draining port 4 of the polymerization tank 20 within a relatively short time and to effectively prevent the fluorine-containing polymer from adhering to and remaining on the inner surface of the inclined bottom portion 3 of the polymerization tank 20. As the apex angle θ becomes smaller from less than 90° (for example, 80°), the ratio of the height (vertical dimension) to the diameter (horizontal dimension) of the polymerization tank becomes larger, and the polymerization tank becomes relatively vertically-elongated. For such a relatively vertically-elongated polymerization tank, there is a concern that the dispersion efficiency in the polymerization tank may become poor. The apex angle θ of larger than 120° (for example, 130°) is an angle that is gentler than 120°, which corresponds to a semi-elliptical shape on a cross section and creates a concern of adhesion and remaining at the time of draining, which is not preferable.

The apex angle θ of the conical inclined bottom portion 3 is preferably 105° or larger and/or 115° or smaller, more preferably 108° or larger and/or 112° or smaller and still more preferably 110°.

The polymerization tank 20 normally has a top board (lid) 7 and can be configured so that the pressure in the polymerization tank 20 can be increased. The top board 7 may have one or more openings (not shown) that can be opened and closed to supply a raw material or the like into the polymerization tank 20 or discharge a gas in the polymerization tank 20.

The polymerization tank 20 may further have a stirring blade 9, a baffle (baffle board) 11 and/or the like depending on the situation. The stirring blade 9, the baffle 11 and/or the like are not limited as long as they do not interfere the conical inclined bottom portion 3 (and the stirring blade 9 and the baffle 11 do not interfere each other in a case where both the stirring blade 9 and the baffle 11 are present), and a stirring blade, a baffle and/or the like having an arbitrary appropriate form can be used. The stirring blade 9 can be, for example, an "RfBLEND" (registered trademark) impeller (manufactured by Sumitomo Heavy Industries Process Equipment Co., Ltd., two deformed plate-shaped stirring blades), an "LvBLEND" (registered trademark) impeller (manufactured by Sumitomo Heavy Industries Process Equipment Co., Ltd., two curved paddle-shaped stirring blades), an "LtBLEND" (registered trademark) impeller (manufactured by Sumitomo Heavy Industries Process Equipment Co., Ltd., two inclined paddle-shaped stirring blades), a "BullBLEND" (registered trademark) impeller (manufactured by Sumitomo Heavy Industries Process Equipment Co., Ltd., paddle-shaped stirring blade having a grid in the upper portion), a "MAXBLEND" (registered trademark) impeller (manufactured by Sumitomo Heavy Industries Process Equipment Co., Ltd., stirring blade having a bottom paddle and an upper grid integrated together), a "FULLZONE" (registered trademark) impeller (manufactured by Kobelco Eco-Solutions Co., Ltd., stirring blade into which two large plate-shaped paddles are combined), a three-blade retreat impeller, an anchor impeller, (a gas-phase impeller may be attached to the above-listed stirring blade) or the like. The baffle 11 may have, for example, a pipe shape, a plate shape, a composite shape thereof or the like (selected in combination with the stirring blade). Regarding the stirring blades 9 and/or the baffles 11, respectively, the number thereof provided in the polymerization tank 20 and the disposition thereof in the polymerization tank 20 may be determined as appropriate.

The polymerization tank 20 may have a metal inner surface, which does not limit the present embodiment. In more detail, in the polymerization tank 20, at least the inner wall surface (including the inner surface of the side wall 1, the inner surface of the inclined bottom portion 3 and the inner surface of the top board 7) may be made of a metal. In a case where the stirring blade 9, the baffle 11 and/or the like are present, the surfaces thereof may also be made of a metal.

The polymerization tank 20 having a metal inner surface has high pressure resistance compared with that of a polymerization tank having an inner wall surface on which glass lining has been performed. The metal that forms the inner surface of the polymerization tank 20 may be one or more arbitrary metals and can be, for example, at least one selected from the group consisting of stainless steel, nickel alloy steel and carbon steel.

However, the polymerization tank 20 of the present embodiment is not limited thereto and may have an inner wall surface on which glass lining has been performed.

On the metal inner surface (in more detail, a predetermined region thereon) of the polymerization tank 20, arbitrary appropriate processing, for example, hydrophilic processing, may be performed. The predetermined region includes at least a region that can come into contact with the reaction mixture between a step (a) to be described below and, preferably, can be substantially all of the metal inner surface.

### (Method for Producing Fluorine-Containing Polymer)

A method for producing a fluorine-containing polymer of the present embodiment comprises
(a) polymerizing at least a fluorine-containing monomer in a reaction mixture containing water by suspension polymerization in the above-described polymerization tank 20 to obtain a particulate fluorine-containing polymer, and
(b) draining substantially all of the reaction mixture containing the particulate fluorine-containing polymer and water from the polymerization tank. Hereinafter, each step will be described in more detail.

### · Step (a)

In the above-described polymerization tank 20, at least a fluorine-containing monomer is polymerized by suspension polymerization in a reaction mixture to obtain a particulate fluorine-containing polymer.

The reaction mixture contains water. In addition, the reaction mixture may contain a fluorine-containing solvent and water. The fluorine-containing solvent needs to be a liquid-phase substance capable of dissolving the fluorine-containing monomer. The fluorine-containing solvent may be the fluorine-containing monomer itself. The fluorine-containing solvent functions as a reaction field of the polymerization. While not limited to the present embodiment, in this case, a polymerization reaction proceeds in a state where the fluorine-containing solvent containing the fluorine-containing monomer dissolved therein (or being the fluorine-containing monomer itself) has been suspended in water or vice versa. In any case (where the reaction mixture contains or does not contain the fluorine-containing solvent), the reaction mixture comes to contain a generated particulate fluorine-containing polymer.

The fluorine-containing monomer is a monomer having a fluorine atom. In addition to the fluorine-containing monomer, a fluorine-free monomer is optionally polymerized (copolymerized) together. The fluorine-free monomer is a monomer having no fluorine atoms. The fluorine-containing monomer and the optional fluorine-free monomer are selected depending on a fluorine-containing polymer to be produced.

The fluorine-containing polymer can have a melting point of, for example, 150°C or higher and 340°C or lower. The fluorine-containing polymer can be a resin from a different viewpoint.

More specifically, the fluorine-containing polymer is preferably a polymer composed of at least one monomer selected from tetrafluoroethylene, hexafluoropropylene, vinylidene fluoride, chlorotrifluoroethylene, ethylene, perfluoroalkyl vinyl ether, perfluoro(1,1,5-trihydro-1-pentene) and perfluorobutylethylene (here, a polymer composed of ethylene alone is not a fluorine-containing polymer and thus excluded), more preferably a melt-processable fluorine-containing polymer, and still more preferably a tetrafluoroethylene/hexafluoropropylene copolymer [FEP], a tetrafluoroethylene/hexafluoropropylene/perfluoroalkyl vinyl ether copolymer [FEP], a tetrafluoroethylene/perfluoroalkyl vinyl ether copolymer [PEA], poly(chlorotrifluoroethylene) [PCTFE], a tetrafluoroethylene/chlorotrifluoroethylene/perfluoroalky l vinyl ether copolymer [CPT], a tetrafluoroethylene/ethylene/perfluoro(1,1,5-trihydro-1-pentene) copolymer [ETFE], a tetrafluoroethylene/ethylene/perfluorobutylethylene polymer [ETFE], a tetrafluoroethylene/ethylene/hexafluoropropylene/perfluor o(1,1,5-trihydro-1-pentene) copolymer [EFEP], a tetrafluoroethylene/ethylene/hexafluoropropylene/perfluor obutylethylene copolymer [EFEP], an ethylene/chlorotrifluoroethylene copolymer [ECTFE], poly(vinylidene fluoride) [PVdF], a tetrafluoroethylene/vinylidene fluoride copolymer [VT], a tetrafluoroethylene/hexafluoropropylene/vinylidene fluoride copolymer [THV] or the like. Among these, a perhalopolymer, FEP, PFA, PCTFE and CPT, which do not include any C-H bonds and have high resistance to oxidation treatments, are particularly preferable. However, the fluorine-containing polymer is not limited to melt-processable fluorine-containing polymers and may be, for example, polytetrafluoroethylene (PTFE).

The reaction mixture may further contain a polymerization initiator. As the polymerization initiator that is used for the suspension polymerization, it is possible to appropriately use a variety of oil-soluble organic peroxides, water-soluble persulfates or the like that are ordinarily used for radical polymerization, and, in particular, it is possible to preferably use organic peroxides such as peroxycarbonates and peroxy esters, that is, di(chlorofluoroacyl) peroxide, di(fluoroacyl) peroxide, di (ω-hydrododecafluoroheptanoyl) peroxide, di-n-propyl peroxydicarbonate, di-i-propyl peroxydicarbonate, t-butyl peroxyisopropyl carbonate, bis(4-t-butylcyclohexyl) peroxydicarbonate, di-2-ethylhexyl peroxydicarbonate, di-i-butyryl peroxide and the like. Among these, di-i-propyl peroxydicarbonate and di-n-propyl peroxydicarbonate, which are hydrocarbon-based organic peroxides, are preferable from the viewpoint of the decomposition rate (half-life), the frequency factor, the cost or the like.

The reaction mixture may contain a suspension stabilizer, but preferably contains no suspension stabilizers. This is because the purity of a fluorine-containing polymer to be obtained in the end is higher in the case of using no suspension stabilizers than in the case of using a suspension stabilizer. In the case of using no suspension stabilizers, the shape and/or dimension of the particles of a fluorine-containing polymer to be generated becomes uneven, and the draining and transfer of the reaction mixture can become difficult in the related art; however, in the present embodiment, the apex angle θ of the conical inclined bottom portion 3 is 90° or larger and 120° or smaller as described above, and it is thus possible to efficiently drain the reaction mixture 10 containing the particulate fluorine-containing polymer and water from the polymerization tank 20.

Suspension stabilizers are roughly classified into two categories of inorganic colloidal stabilizers and stabilizers composed of a hydrocarbon-based polymer, and the stabilizers composed of a hydrocarbon-based polymer are preferable since the stabilizers can be efficiently removed from a system by oxidation and do not allow any metals to remain in the obtained fluorine-containing polymer. The suspension stabilizer can be used after being dissolved in polywater before the initiation of polymerization. Examples of the above-described hydrocarbon-based polymer include polyvinyl alcohol, methyl cellulose, hydroxypropyl cellulose, polyvinylpyrrolidone, polyaspartic acid and the like, and, among these, polyvinyl alcohol or methyl cellulose is preferable from the viewpoint of safety, low cost and performance.

The polymerization conditions of the suspension polymerization can be set as appropriate depending on the kind, physical properties and the like of the intended fluorine-containing polymer. The polymerization pressure can be ordinarily a pressure of 2.0 MPa gauge pressure (hereinafter, indicated by MPaG) or less in a case where the polymerization tank 20 has an inner wall surface on which glass lining has been performed, and in a case where the polymerization tank 20 has a metal inner surface, the suspension polymerization can be performed with no problems even at a pressure exceeding such a pressure. Application of a higher polymerization pressure makes it possible to shorten the reaction time.

The suspension polymerization may be performed in an arbitrary form such as a continuous manner, a batch manner, a semi-batch manner. In the case of the semi-batch manner, the fluorine-containing monomer and the optional fluorine-free monomer are added as appropriate in the middle of the polymerization operation, and, additionally, the polymerization initiator or the like can be added as appropriate.

The fluorine-containing polymer that is obtained as described above has a particulate form. The average particle size of the fluorine-containing polymer can be 10 µm or more and 2,000 um or less.

### · Step (b)

Substantially all of the reaction mixture containing the particulate fluorine-containing polymer and water is drained from the polymerization tank 20 and appropriately transferred to a subsequent step.

"Substantially all" of the reaction mixture being drained from the polymerization tank 20 means that the reaction mixture is drained with the intention of emptying the inside of the polymerization tank 20 and intends to allow the reaction mixture to remain in the polymerization tank to a certain extent (a small amount as described below).

In a case where the reaction mixture contains the fluorine-containing solvent and water in the step (a), at the time of draining the reaction mixture from the polymerization tank 20 in the step (b), it is preferable that the reaction mixture contains the particulate fluorine-containing polymer and water, but is substantially free from the fluorine-containing solvent (and the unreacted fluorine-containing monomer and the unreacted fluorine-free monomer in the case of being used, which will be true below). This can be realized by decreasing the pressure in the polymerization tank 20 to gasify the fluorine-containing solvent and purge the fluorine-containing solvent from the polymerization tank 20. This makes it possible to recover the fluorine-containing solvent and also makes it possible to shorten the drainage time of the reaction mixture from the polymerization tank.

A reaction mixture being "substantially free from" the fluorine-containing means that the concentration of the fluorine-containing solvent in the fluorine-containing mixture is 0.1 mass% or lower and preferably 0 mass%.

According to the present embodiment, since the apex angle θ of the conical inclined bottom portion 3 is 90° or larger and 120° or smaller as described above, it is possible to efficiently drain the reaction mixture 10 containing the particulate fluorine-containing polymer and water from the polymerization tank 20. In more detail, it is possible to drain the reaction mixture 10 containing the particulate fluorine-containing polymer and water from the draining port 4 of the polymerization tank 20 within a relatively short time and to effectively prevent the fluorine-containing polymer from adhering to and remaining on the inner surface of the inclined bottom portion 3 of the polymerization tank 20. A small amount of the fluorine-containing polymer may adhere to and remain in the polymerization tank 20 after the reaction mixture is drained from the polymerization tank 20; however, in this case, a small amount of the adhering and remaining fluorine-containing polymer may be removed by, for example, jet cleaning.

Hitherto, the polymerization tank for production of a fluorine-containing polymer and the method for producing a fluorine-containing polymer using such a polymerization tank in one embodiment of the present disclosure have been described in detail, but the present disclosure is not limited thereto, and appropriate arbitrary modification, substitution, addition or the like is possible.

### Examples

In Tests 1 to 3 below, how the shape of the bottom portion of a polymerization tank affect discharge performance in the case of draining a reaction mixture containing a particulate fluorine-containing polymer and water from the polymerization tank was investigated. In Tests 1 to 3, a transparent acrylic polymerization tank was used for convenience so that the inside of the polymerization tank was easily and visually confirmed from the outside, and a mixture prepared in advance to imitate a reaction mixture was put into such a polymerization tank and tested.

### (Test 1: Examples 1 to 3 and Comparative Examples 1 and 2)

In Test 1, discharge performance was compared and evaluated with a polymerization tank having a conical bottom portion and a polymerization tank having a bottom portion with a semi-elliptical shape on a cross section.

In Examples 1 to 3 and Comparative Examples 1 and 2, polymerization tanks having a cylindrical side wall with an inner diameter of 310 mm and a draining portion with an inner diameter of 23.4 mm concentrically, in which a bottom portion and a stirring blade provided between the side wall and the draining portion were different as described below, were used. In all cases, two plate-shaped baffles (18 mm in width and 2 mm in thickness) were disposed as baffles in the polymerization tank symmetrically (radially) on the same plane that passed through the central line of the cylindrical side wall and in contact with the inner surface of the cylindrical side wall. Here, a distance d (not shown) between the lower edge of the plate-shaped baffle and the upper edge of the inclined bottom portion was set as described below.

· Example 1
   Bottom portion: Conical shape, apex angle θ = 90°
   Stirring blade: "LtBLEND" (registered trademark) impeller (manufactured by Sumitomo Heavy Industries Process Equipment Co., Ltd.)
   d: 70 mm
· Example 2
   Bottom portion and stirring blade: Same as in Example 1
   d: 70 mm
• Example 3
   Bottom portion and stirring blade: Same as in Example 1
   d: 70 mm
• Comparative Example 1
   Bottom portion: Semi-ellipse on cross section, major axis:minor axis = 2:1 (the minor axis direction coincided with the central line of the cylindrical side wall)
   Stirring blade: Same as in Example 1
   d: 70 mm
• Comparative Example 2
   Bottom portion: Same as in Comparative Example 1
   Stirring blade: Three-blade retreat impeller
   d: 50 mm

A mixture A having the following formulation was prepared by imitating one example of the reaction mixture.

### · Mixture A

Particulate fluorine-containing polymer 22.0 mass% (tetrafluoroethylene/hexafluoropropylene copolymer (FEP), average particle size: approximately 500 um, water content: 12.2 mass%)
Water 34.0 mass%
Fluorine-containing solvent 44.0 mass% (octafluorocyclobutane)
Others zero mass% (a polymerization initiator or the like was substantially not present due to decomposition)

Approximately 21 L (as shown in Table 1 in more detail) of the mixture A was put into each polymerization tank, and the discharge performance of each polymerization tank was evaluated. The discharge performance was evaluated with the following standards regarding the power, the discharge time and the residual polymer.

### · Required Power

After the mixture was put into the polymerization tank, the net power necessary to rotate the stirring blade at the possible largest revolutions per minute to an extent that vortex (so-called V cut: (the angle of) a vortex state that can be brought about by stirring) was not formed in the vicinity of the interface of the polymerization tank with a valve in the draining portion of the polymerization tank fully closed (a value obtained by subtracting from the actual measurement value of the power at this time, the measurement value of the power when the stirring blade was rotated with the polymerization tank in an empty state) was measured.

### · Discharge Time

While the stirring blade was rotated at the revolutions per minute at which the necessary power had been measured, the fully closed value of the draining portion of the polymerization tank was fully opened to drain the mixture in the polymerization tank, and the revolutions per minute of the stirring blade was decreased stepwise as the liquid surface of the mixture in the polymerization tank lowered. A period of time taken from the beginning of the opening of the valve to the end of the discharge of the mixture (the mixture did not come out of the polymerization tank any longer) was measured as the discharge time.

### · Residual Polymer

After the discharge of the mixture ended, whether or not the polymer remained in the polymerization tank was visually confirmed.

The evaluation results of the discharge performance are shown in Table 1.

**[Table 1]**

| | Mixture A (L) | Necessary power (kW/m³) | Discharge time (min) | Residual polymer |
|---|---|---|---|---|
| Example 1 | 21.0 | 0.8 | 2.75 | Absent |
| Example 2 | 21.0 | 2.0 | 3.80 | Absent |
| Example 3 | 21.0 | 3.9 | 4.50 | Absent |
| Comparative Example 1 | 21.3 | 3.9 | 6.75 | Present |
| Comparative Example 2 | 21.1 | 3.9 | 8.25 | Present |

As understood from Table 1, in the polymerization tanks of Examples 1 to 3 having a conical bottom portion (θ = 90°), the polymer did not remain in the polymerization tank after the mixture A was drained. In contrast, in the polymerization tanks of Comparative Examples 1 and 2 having a bottom portion with a semi-elliptical shape on a cross section, the polymer remained in the polymerization tank after the mixture A was drained. Furthermore, in the polymerization tanks of Examples 1 to 3, the discharge times were short compared with those in the polymerization tanks of Comparative Examples 1 and 2.

### (Test 2: Examples 4 to 6)

In Test 2, discharge performance was compared and evaluated regarding different apex angles θ in a polymerization tank having a conical bottom portion.

In Example 4, the same polymerization tank as the polymerization tank used in Example 1 (that is, apex angle θ = 90°) was used. In Examples 5 and 6, the same polymerization tanks as the polymerization tank used in Example 1 except that the apex angles θ were set to 110° and 120°, respectively were used.

A mixture B having the following formulation was prepared by imitating one example of the reaction mixture.

### · Mixture B

Particulate fluorine-containing polymer 37.7 mass% tetrafluoroethylene/perfluoroalkyl vinyl ether copolymer (PFA), average particle size: approximately 500 um, water content: 19.8 mass%)
Water 62.3 mass%

The mixture B was put into each polymerization tank in an amount shown in Table 2, and the discharge performance of each polymerization tank was evaluated. The discharge performance was evaluated in the same manner as described above, and furthermore, the amount of a residual polymer was measured.

The evaluation results of the discharge performance are shown in Table 2.

**[Table 2]**

| | θ (°) | Mixture B (L) | Necessary power (kW/m³) | Discharge time (sec) | Residual polymer |
|---|---|---|---|---|---|
| Example 4 | 90 | 25.5 | 0.41 | 90 | Present (0.60 kg) |
| Example 5 | 110 | 24.0 | 0.48 | 170 | Present (0.18 kg) |
| Example 6 | 120 | 23.2 | 0.47 | 170 | Present (1.02 kg) |

As understood from Table 2, in the polymerization tank of Example 4 (θ = 90°), the discharge time was short compared with those in the polymerization tank of Example 5 (θ = 110°) and the polymerization tank of Example 6 (θ = 120°), but the amount of the polymer remaining in the polymerization tank after the mixture B was drained was larger than that in Example 5. In contrast, in the polymerization tank of Example 5 (θ = 110°), the amount of the polymer remaining in the polymerization tank after the mixture B was drained was smallest. In the polymerization tank of Example 6 (θ = 120°), the discharge time was approximately the same as that in the polymerization tank of Example 5 (θ = 110°), but the amount of the polymer remaining in the polymerization tank was largest. In any cases, it was possible to rapidly remove the residual polymer from the polymerization tank by jet cleaning using water. In the respective cases, the amounts of cleaning water used to remove substantially all of the residual polymer were 0.4 kg (Example 4), 0.2 kg (Example 5) and 0.7 kg (Example 6).

### (Test 3: Example 7)

In Test 3, discharge performance was evaluated regarding a mixture containing a higher concentration of the polymer in a polymerization tank having a conical bottom portion and an apex angle θ = 90°.

In Example 7, the same polymerization tank as the polymerization tank used in Example 1 (that is, apex angle θ = 90°) was used.

A mixture C having the following formulation was prepared by imitating one example of the reaction mixture.

### · Mixture C

Particulate fluorine-containing polymer 58.4 mass% (tetrafluoroethylene/perfluoroalkyl vinyl ether copolymer (PFA), average particle size: approximately 500 µm, water content: 19.8 mass%)
Water 41.6 mass%

The mixture C was put into the polymerization tank in an amount shown in Table 3, and the discharge performance of the polymerization tank was evaluated. The discharge performance was evaluated in the same manner as described above, and furthermore, the amount of a residual polymer was measured.

The evaluation results of the discharge performance are shown in Table 3.

**[Table 3]**

| | θ (°) | Mixture C (L) | Necessary power (kW/m³) | Discharge time (sec) | Residual polymer |
|---|---|---|---|---|---|
| Example 7 | 90 | 24.0 | 2.03 | 250 | Present (0.04 kg) |

As understood from Table 3, in Example 7 where the mixture C containing a higher concentration of the polymer was used, compared with Examples 4 to 6 where the mixture B containing a lower concentration of the polymer was used (refer to Table 2), the necessary power was large, and the discharge time became long, but amount of the polymer remaining in the polymerization tank after the mixture C was drained was extremely small. Even in the case of Example 7, it was possible to rapidly remove the residual polymer from the polymerization tank by jet cleaning using water. The amount of cleaning water used to remove substantially all of the residual polymer was 0.2 kg (Example 7).

### Industrial Applicability

The polymerization tank for production of a fluorine-containing polymer of the present disclosure can be preferably used to produce a fluorine-containing polymer as a material for a variety of forming processes.

The present application claims priority based on Japanese Patent Application No. 2022-001647, filed on January 7, 2022 in Japan, the content of which is all incorporated into the present specification by reference.

### Reference Signs List

1 Side wall
3 Inclined bottom portion
4 Draining port
5 Draining portion
7 Top board (lid)
9 Stirring blade
11 Baffle (baffle board)
20 Polymerization tank
θ Apex angle

## Claims

1. A polymerization tank for obtaining a particulate fluorine-containing polymer by polymerizing at least a fluorine-containing monomer in a reaction mixture containing water by suspension polymerization, the polymerization tank comprising:
a side wall;
a conical inclined bottom portion that is positioned below the side wall; and
a draining port of the reaction mixture that is positioned at a lower apex portion of the conical inclined bottom portion,
wherein an apex angle of the conical inclined bottom portion is 90° or larger and 120° or smaller.

2. The polymerization tank according to claim 1,
wherein the apex angle of the conical inclined bottom portion is 105° or larger and 115° or smaller.

3. A method for producing a fluorine-containing polymer, comprising:
(a) polymerizing at least a fluorine-containing monomer in a reaction mixture containing water by suspension polymerization in the polymerization tank according to claim 1 or 2 to obtain a particulate fluorine-containing polymer; and
(b) draining substantially all of the reaction mixture containing the particulate fluorine-containing polymer and water from the polymerization tank.

4. The method for producing a fluorine-containing polymer according to claim 3,
wherein, in the (a), the reaction mixture contains a fluorine-containing solvent and water, and
in the (b), the reaction mixture contains the particulate fluorine-containing polymer and water, but is substantially free from the fluorine-containing solvent.

5. The method for producing a fluorine-containing polymer according to claim 3 or 4, wherein the fluorine-containing polymer has an average particle size of 10 µm or more and 2,000 µm or less.
